Europäisches Patentamt

**European Patent Office**

**Office européen des brevets**

(11) Publication number: **0 153 079**
A1

# EUROPEAN PATENT APPLICATION

(21) Application number: **85300751.6**

(22) Date of filing: **05.02.85**

(51) Int. Cl.⁴: **F 16 D 43/18**

(30) Priority: **13.02.84 US 579267**
**09.01.85 US 690048**

(43) Date of publication of application: **28.08.85**
**Bulletin 85/35**

(84) Designated Contracting States: **DE FR GB IT**

(71) Applicant: **Pacific Scientific Company, 1346 South State College Boulevard, Anaheim California 92803 (US)**

(72) Inventor: **Yang, Elmer C., 2717 E. Grove Avenue, Orange California 92667 (US)**

(74) Representative: **Rushton, Ronald et al, SOMMERVILLE & RUSHTON 11 Holywell Hill, St. Albans Hertfordshire AL1 1EZ (GB)**

(54) **Capstan spring centrifugal clutch.**

(57) A pair of interleaved helical coil springs (12 and 14) rotated by an input shaft (10) expanded by centrifugal force to engage a surrounding cylindrical surface of an output shaft (16) at a predetermined speed. The springs are oriented with respect to the shafts so that the engagement produces a capstan effect that increases the load transfer efficiency.

In another arrangement, coil springs (32 and 34) are pre-loaded to initially grip an input shaft (30) while being connected to rotate with an output shaft (36). As the speed of the input shaft increases, centrifugal force expands the diameter of the spring coils to release the input shaft at a predetermined speed.

In a variation of the above, the axial thickness of the coil springs varies from a maximum value immediately adjacent the point at which they are anchored to one of the shaft members to a minimum thickness towards the free end of the springs. Slightly tapering the spring diameter on the first few thicker coils so as to slightly reduce the contact reduces the back driving effect.

0153079

-1-

CAPSTAN SPRING CENTRIFUGAL CLUTCH

## Background of the Invention

This invention relates to the field of clutches, and more particularly to clutches utilizing a coil spring as a clutch element.

Conventional clutches typically engage or disengage over a narrow speed range, measured in revolutions per minute (RPM). They tend to suddenly apply a load when the clutch member engages or disengages, which can be harmful to the system components. One object of this invention is to provide a smooth clutch engagement over a relatively broad RPM range.

It is also an object of this invention to provide a simple, yet light weight clutch mechanism which can be designed to operate over a broad range of speeds.

Further, many conventional clutches require complex geometry or extremely high hardness on mating surfaces to efficiently accommodate the forces being transferred. It is an object of this invention to provide a high efficiency clutch which uses a minimum number of parts, simple geometry, conventional materials, moderate hardness characteristics, and a small size.

Many conventional clutches require operation in a fluid environment. Another object of this invention is to provide a clutch which does not require a fluid bath for operation.

Conventional clutches require the use of hard materials in order to prevent fracture of the components. Such hard materials increase the hazards of galling and cold welding. It is an object of this invention to provide a clutch which allows the use of softer, dissimilar materials so as to reduce the problems of galling and cold welding.

## Summary of the Invention

Briefly stated, the invention comprises a clutch having first and second members mounted for rotation relative to each other. A plurality of interconnected capstan spring coils are concentrically positioned with respect to a cylindrical surface on one of the members. The spring coils have (1) an engaged position wherein they are forcibly engaging the cylindrical surface to transmit torque between the members, and (2) a disengaged position wherein they are spaced from the cylindrical surface so as not to transmit torque. Further, the coils are free to expand in diameter in response to centrifugal force from one position to the other position at a predetermined high speed range.

In one form of the invention, the spring coils are connected to be rotated by an inner input member. The cylindrical surface is on an outer, output member adjacent to the outer diameter of the spring coils, with a predetermined gap initially separating the spring coils and the surrounding surface. As the rotational velocity of the input member increases the centrifugal expansion of the spring coils, the outer surfaces of the spring coils begin to frictionally engage the surrounding surface acting as a clutch. If the coils are rotating faster than the outer member, this engagement produces an unwinding force on the spring coils which increases the engagement, thus improving the efficiency of the torque transfer. The spring connection to the input member permits the spring coils to expand outward in a radial direction.

In another form of the invention, the clutch is used in a starter by having the centrifugal expansion of the spring coils disengage an input member. This occurs when the spring coils are connected to rotate the output member and the springs are preloaded onto a cylindrical surface on the input member. As the input member begins rotating, the preload between the spring coils and the input member causes rotation of the output member. The inertia of the output member tends to produce a winding force on the spring coils about the input member, providing a capstan effect which increases the load transfer efficiency. The preload between the spring coils and the inner member is designed such that when the speed of the output member begins to exceed a preset level, the centrifugal force exerted on the spring coils will gradually counteract the preload and allow the outer shaft to rotate relative to the inner shaft. As the centrifugal force further increases, the spring coils will have correspondingly less contact with the cylindrical surface on the inner member, thereby de-coupling or de-clutching the inner member.

When the spring rotational speed decreases, the centrifugal force decreases, and the spring coils contract until they re-engage the inner member. If the inner member is at that stage rotating faster than the outer member, the spring coils will smoothly grip the inner member so that the outer member will be once more driven. However, if the inner member is moving slowly or not moving, as in a typical starter situation, the spring coils merely slide on the inner member in an overrunning condition in that the outer member will be providing a spring unwinding torque.

While any number of springs can be used, it is an important feature of the invention to use symmetrical arrangements of two or more interlaced springs. Equally spaced arrangements of interlaced springs can maintain their symmetry under centrifugal expansion. Thus, rotational changes in balance can be minimized to allow the clutch effect of the springs to operate at high rotational speeds. In order to interlace the springs, there must be a space between adjacent coils of the same spring to accommodate the interlaced spring or springs. This space between coils facilitates machining of these coil springs, thereby reducing manufacturing cost. This approach also enables close tolerances between adjacent coils and enables compact designs.

In a still further variation on this invention, the geometry of the springs is varied in order to minimize the axial length of the spring while providing an increased amount of spring material where the spring stresses are highest. The spring coils nearest the connection point or anchor point are axially thicker than the remaining coils since the loads are greatest nearest the anchor point. The spring coil axial thickness can vary along the axial length of the spring in a number of ways depending upon the design requirements and manufacturing capabilities. Ideally, the spring coil axial thickness would be greatest immediately adjacent the anchor point and decrease in a logarithmic manner towards the free end of the spring. From a practical viewpoint, the spring coil axial thickness will decrease in a linear manner from a maximum at the spring coil immediately adjacent the anchor point, to some point along the length of the spring after which the thickness would be constant.

The increase in spring coil axial thickness immediately adjacent the anchor point does cause an increase in the torque required to back drive the spring. If desired, this increase can be reduced by the tapering diameter of the spring slightly along the axial length of the first few coils immediately adjacent the anchor point so as to reduce the impact of those first few coils on the back drive effect. Simply phrased, the radial spring dimension is varied to alter the back drive affect by varying the clearance or preload.

This use of variable axial thickness springs not only better accommodates the load distribution during operation of the clutch, but also allows the use of materials which were previously not usable because of the high stresses exerted on the springs. The use of these materials improves the spring life and the clutch operation, and reduces the galling and cold weld problems associated in previous designs. The result is a much more compact, long-life clutch which can operate at higher torques, and over a broader speed range, than previously available.

## Brief Description of the Drawings

The invention will be more fully understood from the following detailed description when considered in connection with the accompanying drawings wherein the invention is illustrated by way of example and in which;

FIG. 1 is an exploded perspective view of the interlaced springs 12 and 14, the input member 10, and the connecting plate 17 which attaches the springs 12 and 14 to the input member 10;

FIG. 2 is a cross-sectional view of this invention as seen in the direction A-A of FIG. 1;

FIG. 3 is a perspective view of the connecting plate 17 which connects the interlaced springs 12 and 14 to the inner member 10;

FIG. 4 is an end view of the plate 17 of FIG. 3;

FIG. 5 is a cross-sectional view of an alternate embodiment of this invention wherein the interlaced springs 32 and 34 are connected to the output shaft 36, the view being taken along the direction B-B of FIG. 6;

FIG. 6 is an exploded perspective view showing how the interlaced springs 32 and 34 of the alternate embodiment are connected to the output shaft 36;

FIG. 7 is a cross-sectional view of an alternate embodiment of the springs 52 and 54 showing coils 52 and 54 with an axial thickness t varying uniformly along the axial length of springs 52 and 54;

FIG. 8 is a cross-sectional view of an alternate embodiment of the springs 62 and 64, showing coils whose axial thickness t and radial thickness h non-uniformly along the length of the spring 62 and 64; and

FIG. 9 is an enlarged, partial, sectional view of one end of the springs 62 and 64 showing the axial coil thickness t variations in one embodiment of this invention.

## Detailed Description of the Preferred Embodiment

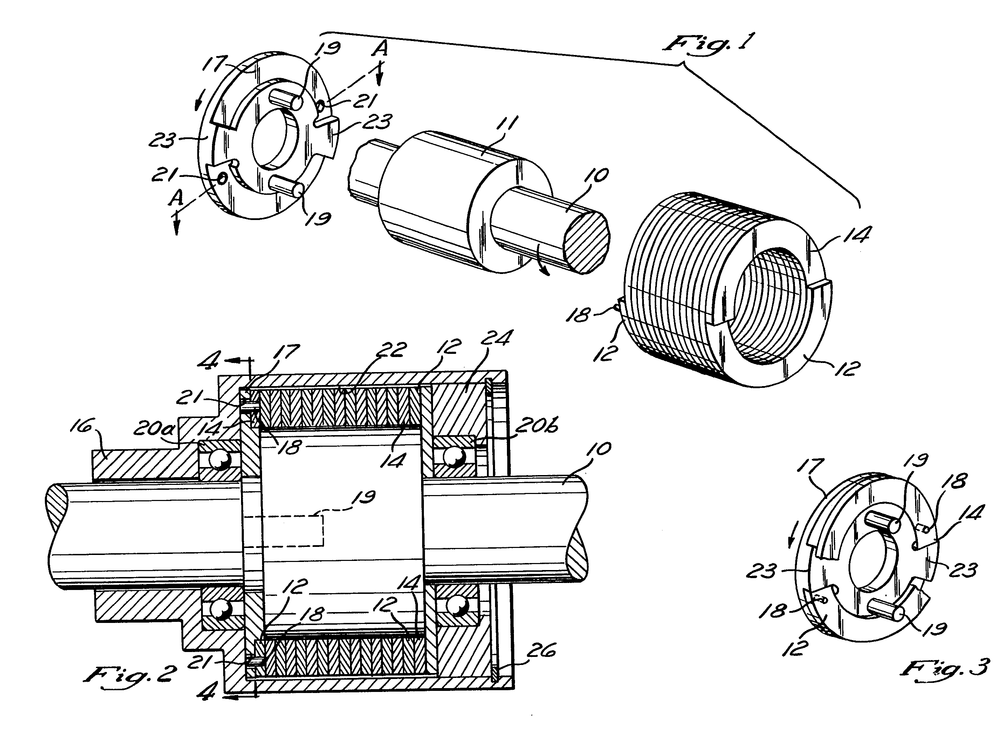

As shown in FIGS. 1 and 2, two coil springs 12 and 14 are concentrically interlaced. The springs 12 and 14 are identical, each having a plurality of turns or coils N (not labeled), with the same diameter and with a space between each adjacent coil sufficient to accommodate the coil of the other interlaced spring. As shown, coil springs 12 and 14 are formed with a right-handed helix. The cross-sectional shape of coil springs 12 and 14 is shown as rectangular, although numerous cross-sectional shapes would also work. The rectangular shape, with the long axis radially orientated, provides a high resistance to centrifugal expansion which enables the spring-clutch feature to operate at high rotational velocities. This orientation also allows a large number of springs 12 and 14 to be interlaced, so a sufficient numbers of coils for capstan action can be packed into a limited space. Different spring cross sections can accommodate different operational speeds in a more efficient manner by tailoring the spring stiffness parameters accordingly.

Coil springs 12 and 14 are coaxial with an inner member, such as input shaft or member 10, being positioned over a shaft section 11 of stepped-up diameter. The selected diameter directly affects the centrifugal force exerted on the springs 12 and 14; the larger the diameter of shaft section 11, the larger the centrifugal force expanding the springs 12 and 14.

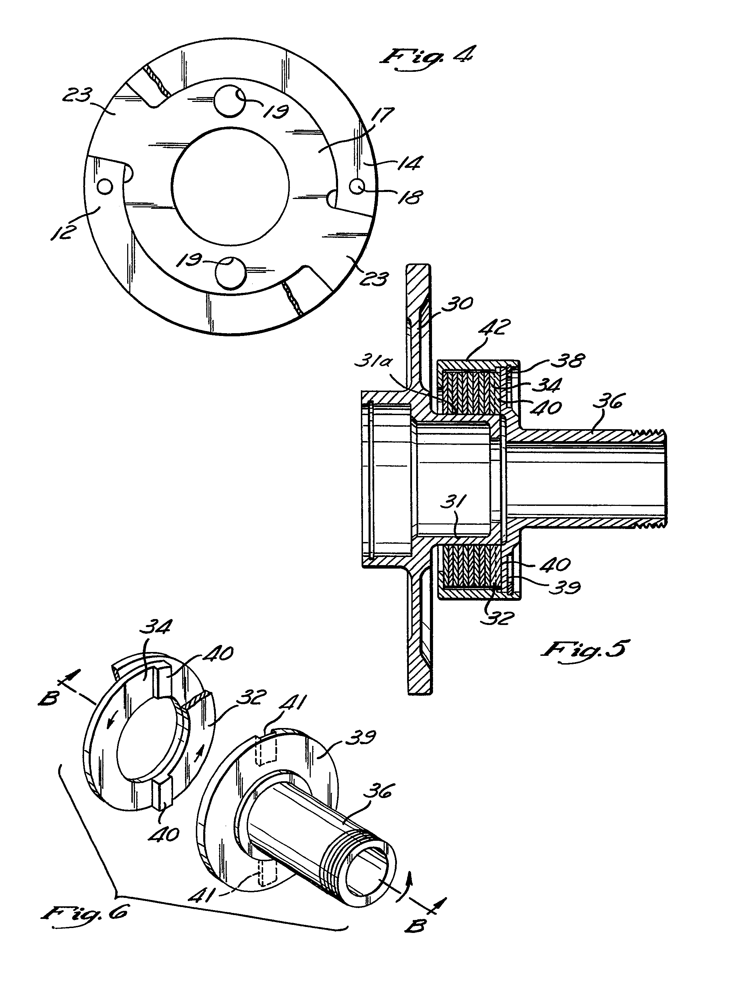

One end of each coil spring 12 and 14 is connected to input shaft 10 through an annular connecting plate 17. Pins 18 are anchored in one end of coil springs 12 and 14 and are loosely positioned in holes 21 in the connecting plate 17. Connecting plate 17, in turn, is fastened to input shaft 10 by pins 19, or other suitable fasteners. As further connection, the plate 17 includes a pair of diametrically spaced, axially extending projections 23, as seen in FIG. 3. The pinned end of each spring 12 and 14 is adjacent a projection 23 such that rotation of end plate 17 in the direction of the arrow in FIGS. 1 and 3 results in projections 23 abutting against the pinned ends of the coil springs 12 and 14 causing them to rotate in that direction. Holes 21 allow the ends of springs 12 and 14 to move, especially in the radial direction as the springs 12 and 14 expand or contract under centrifugal force.

An outer member, such as output shaft or member 16 is positioned coaxial with input shaft 10 and has a portion 22a, containing a cylindrical engaging surface 22 which surrounds and is slightly separated from the outer surface of coil springs 12 and 14 when the springs are not rotating. As illustrated in FIG. 2, suitable bearings 20a and 20b allow output shaft 16 to freely rotate about input shaft 10. An annular bearing ring support 24 holds bearing 20b in position and separates the ends of springs 12 and 14 from bearings 20b to prevent rubbing. Snap ring 26 in turn retains the bearing support 24. Numerous support configurations are possible which would allow free rotation of output shaft 16 with respect to input shaft 10.

Although not mandatory, it is preferred that the coil springs 12 and 14 be preloaded onto section 11 of input shaft 10. Alternately phrased, the diameter of coil springs 12 and 14 in the free, unstressed condition, is smaller than the stepped-up diameter of section 11. Among other benefits, this preload or pre-interference serves to minimize rattling and transient vibration and stresses which would occur in the coil springs 12 and 14 for transient torsional loads which accompany sudden changes in the rotation velocity of input shaft 10. Such transient vibrations and loads could damage the coil springs 12 and 14.

As input shaft 10 begins to rotate in the direction shown in FIG. 1, the end plate projections 23 cause coil springs 12 and 14 to rotate with the shaft. That is, the projections 23 push on the circumferentially facing ends of the springs 12 and 14, as seen in FIG. 3. Any preload or pre-interference between springs 12 and 14 and shaft section 11 also helps impart rotation to the springs 12 and 14. As rotational velocity increases, a centrifugal force is exerted on coil springs 12 and 14, which force tends to expand the diameter of the springs. This expansion reduces the preload, if any, between the coils of springs 12 and 14 and the shaft section 11. Such expansion also closes the gap which previously existed between the outer surfaces of coil springs 12 and 14, and the surrounding cylindrical surface 22 of output member 16. As the rotational velocity of input shaft 10 further increases, the coil springs 12 and 14 expand to contact or engage the engaging surface 22 on cylindrical portion 22a, thereby imparting a velocity to output shaft 16. The centrifugal expansion and contraction of coil springs 12 and 14 thus acts as a clutch. The springs 12 and 14 in this embodiment thus move from a disengaged to an engaged position with cylindrical surface 22 as the spring rotational velocity is increasing.

A sliding contact occurs between the outer surface of coil springs 12 and 14 and cylindrical surface 22 when the springs first contact the surface 22. This sliding contact contributes to a gradual engagement of the input shaft 10 with the output shaft 16 through the coil springs 12 and 14. This gradual connection of output shaft 16 with input shaft 10 exists because the centrifugal expansion of coil springs 12 and 14 occurs gradually as the rotational velocity of input shaft 10 increases. Assuming the output member 16 is not rotating, or is rotating in the direction of the arrow of FIG. 1 at a velocity slower than the springs 12 and 14, the frictional contact between the engaging surface 22 and the springs 12 and 14 results in the driving force by the projections 23 producing an unwinding force on the springs 12 and 14, producing a capstan effect which tends to engage the springs 12 and 14 more tightly on the engaging surface 22, thereby increasing the load transfer efficiency.

On the other hand, if the outer member such as output shaft 16 should be driven by some other source at a speed greater than that of the inner member such as input member 10, a winding force in the springs 12 and 14 is produced by the outer member 16, thus reducing the capstan effect and permitting overrunning.

The range of speeds over which input shaft 10 is coupled to output shaft 16 depends upon several controllable factors. Correct selection and combination of these factors allows a clutch effect to occur at desired speed, or over a desired range of speeds. One factor is the gap or distance between the outer surface of coil springs 12 and 14, and the engaging surface 22 of output shaft 16. The amount of preload between the coil springs 12 and 14 and the input shaft 10 affects the speed at which the coil springs 12 and 14 begin to expand from the input shaft 10. The shape of the cross section of each coil of coil springs 12 and 14 is also important, as it affects the spring stiffness and the spring's resistance to expansion by centrifugal forces. The dimension of the stepped-up diameter 11 also affects the expansion of the coil springs 12 and 14, since the centrifugal force is a function of the radius from the center line of rotation. Thus, the larger the stepped-up diameter 11, the larger the centrifugal forces exerted on the coil springs 12 and 14 and the greater the expansion of those springs for a given rotational speed.

The form of the invention illustrated in FIGS. 1-4 is particularly useful in transmitting additional torque to an already rotating load. For example, in ship propulsion systems, a gas turbine is commonly used to drive a load at a certain speed. Residual heat from the turbine is used to generate steam to rotate a steam turbine to be used as a booster, if the load should increase. In that situation, the clutch in FIG. 1 may be used to connect the steam turbine output to the load. That is, the clutch inner shaft 10 is connected to be rotated by the steam turbine, and the outer shaft 16 is connected to the load. As the steam turbine accelerates, the clutch automatically, and smoothly transmits torque to the outer shaft 16, and hence, to the load, at a predetermined speed. If the booster is no longer needed so that the steam turbine speed is reduced, the clutch smoothly disconnects the input and output members at the predetermined speed.

In one specific example of the invention, the mechanism shown in FIG. 2 can transmit 2,000 horsepower at an operational speed of 8,000 RPM. The input shaft section 11 has a stepped up diameter of 2.5 inches. Two steel coil springs 12 and 14 are used in an interlaced fashion, each spring having a rectangular cross section of .1 x .5 inches, and having 8 coils. The clutch effect begins at a high speed, about 4800 RPM, and the springs 12 and 14 are fully engaged to output shaft 16 at 6400 RPM. Thus the clutch engages gradually between 60% and 80% of the operation speed of 8000 RPM.

The unrestrained, inner diameter of springs 12 and 14 is preferably a few thousandths of an inch less than the outer diameter of the shaft section 11; and the gap between the spring outer diameter, when on the section 11, and the inner diameter of the cylindrical engaging surface 22 is also a few thousandths of an inch. These factors are related. The difference between the unrestrained, outer diameter of springs 12 and 14, and the inner diameter of the surface 22 in this one form of the invention is about 15 thousandths of an inch.

In a second embodiment of this invention shown in FIGS. 5 and 6, a pair of coil springs 32 and 34 are fastened to an output shaft member 36. This embodiment is suitable for high-torque uses, such as for starting an engine connected to the shaft 36.

An inner input shaft member 30 (FIG. 5) is coaxial with the output shaft 36. Coils N (not labeled) on springs 32 and 34 are intertwined and preloaded onto an engaging surface, such as the cylindrical surface 31a on a hub 31 (FIG. 5) of the input shaft 30. Rectangular lugs 40 on the springs 32 and 34 connect one end of each coil spring 32 and 34 to a flange 39 on the output shaft 36. More specifically, the lugs 40 fit within mating rectangular recesses 41 formed in the flange 39. The connection is loose and the lugs 40 and recesses 41 are oriented so that the lugs 40 and the ends of springs 32 and 34 can move radially. A housing 42 (FIG. 5) encloses the springs 32 and 34 and the flange 40. A snap ring 38 (FIG. 5) fixes the axial position of helical springs 32 and 34 within the housing 42.

As shown in FIG. 5, input shaft 30 and output shaft 36 are coaxial and connected only by the helical springs 32 and 34. Thus, when the system is at rest, the preload between the inner surface of coil springs 32 and 34, and the outer cylindrical surface 31a of output shaft 30, serves to connect the input shaft 30 to the output shaft 36 through the lugs 40. As input shaft 30 begins to rotate in a desired direction, indicated by the arrows in FIG 6, the load of output shaft 36, received by the springs 32 and 34 through the lugs 40, resists rotation, producing tension in the springs 32 and 34 which produces a winding action on the coil springs 32 and 34. That is, the helical coil springs 32 and 34 are placed in tension by a counterclockwise rotation of input shaft 30, as shown in FIG. 6, with the result that the springs 32 and 34 are urged to contract and grip input shaft 30 even tighter in a capstan effect, thus increasing the load transfer efficiency from the input shaft 30 to the output shaft 36.

As the rotation of output shaft 36 approaches a predetermined speed, the gripping force is reduced by the centrifugal expansion of the springs 32 and 34. As the rotation of output shaft 36 exceeds the predetermined level, the centrifugal force exerted on coil springs 32 and 34, and an unwinding force on the spring produced by the output shaft 36, causes the springs 32 and 34 to disengage contact with input shaft 30. That is, the flange 39 and its recesses 41 push on the spring lugs 40 placing the springs 32 and 34 in compression. The springs 32 and 34 in this embodiment thus move from an engaged to a disengaged position with respect to the cylindrical surface 31a of the input shaft 30. Also, the springs 32 and 34 permit overrunning, wherein the output shaft 36 goes faster than the input shaft 30.

As the rotational velocity of output shaft 36 decreases to approach the predetermined speed, the coil springs 32 and 34 will re-engage contact with the input shaft 30. If the input shaft 30 is still rotating, the capstan effect also operates during the re-engagement to once more effectively couple the two rotating shafts 30 and 36 in an efficient driving manner. However, if the input shaft 30 is not rotating, the unwinding force on the springs 32 and 34 produced by the output shaft 36 permits overrunning.

The range over which the clutch effectively disengages by disengaging coil springs 32 and 34 from contact with input shaft 30, can be varied by controlling the amount of preload between the coil springs 32 and 34 and input shaft 30. Varying the cross-sectional shape of the coils of coil springs 32 and 34 also affects the clutch actuation by determining the resistance of springs 32 and 34 to centrifugal expansion.

For the embodiment illustrated in FIG. 5, using coil springs having a cross section of approximately .0625 x .5 inches, it is possible to deliver at least 600 foot pounds of torque at zero RPM without degradation, and up to 1,000 foot pounds without slipping or structural failure. Although the deliverable torque decreases as the speed increases, it is still possible to deliver at least 300 foot pounds at 11,000 RPM. Complete disengagement of coil springs 32 and 34 from the input shaft 30 can be designed to occur between 11,000 and 20,000 RPM. The absence of fluids for lubrication and force transfer allows the clutch to operate relatively unaffected by temperatures in the range of -65 to 350 degrees Fahrenheit and under any pressure conditions.

In both embodiments of the invention illustrated, the use of interlaced coil springs 12 and 14, or 32 and 34, allows this clutch to operate at high rotational velocities, from a few thousand RPM, to rotational speeds over 20,000 RPM. Using two interlaced coil springs such as springs 12 and 14 allows the springs to be installed symmetrically and to retain that symmetrical weight distribution during operation at both low and high rotational speeds. Thus, as seen in FIG. 1, both ends of the springs 12 and 14 are spaced 180° apart. This relationship stays the same as the coils expand. More than two coil springs can be used, so long as the springs are symmetrically positioned and designed to expand symmetrically under centrifugal forces. Thus, if three were used, the ends would be spaced 120°, etc. If only a single coil spring were used, centrifugal expansion of that spring would result in an unsymmetrical weight distribution which in turn would cause a rotational unbalance that is unacceptable at high rotational velocities.

The spacing between the individual spring coils such as spring 12, to accommodate coils of an additional spring such as spring 14, also makes it easier to machine the springs 12 and 14, and still keep close fitting tolerances, thereby reducing manufacturing costs, while obtaining compactness. The absence of fluids or lubricants also enables the clutch to operate over a wide temperature range. The high load transfer efficiency of the capstan effect results in a relatively low weight clutch assembly compared to the torque which can be transmitted.

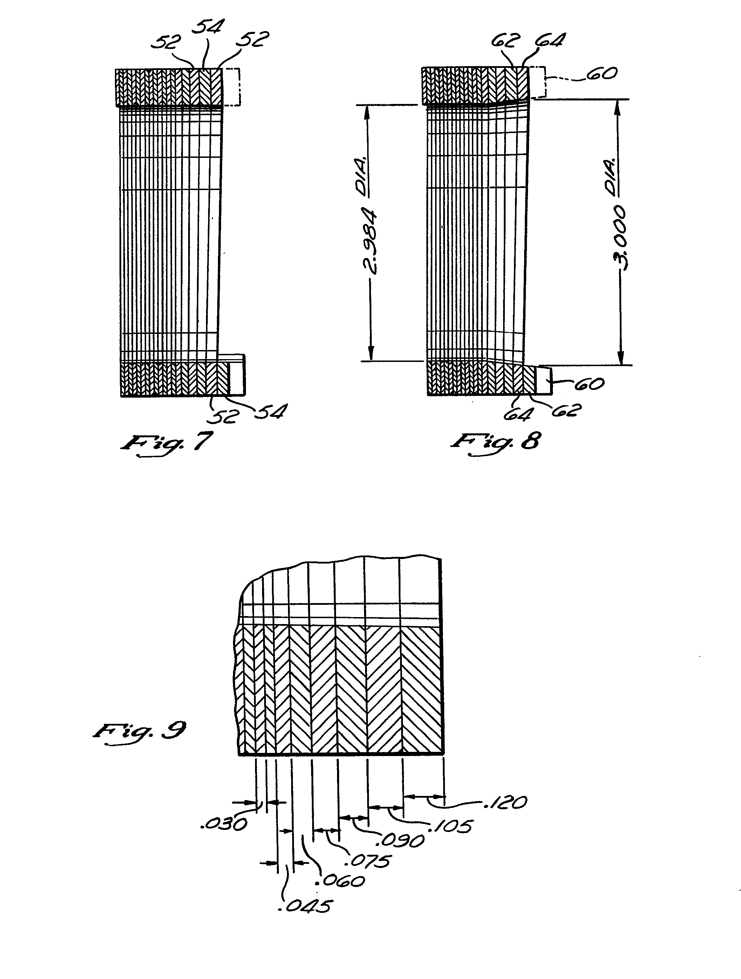

FIGS. 7 and 8 show an alternate embodiment of the coil springs 12, 13, 32, and 34, suitable for use in the above inventions. Referring to FIG. 7, two coil springs 52 and 54 are again interleaved or intertwined as previously described. In this embodiment, however, the geometry of the coil springs 52 and 54 varies in that the axial thickness t of each coil decreases at a constant rate, along the length of the helix of the coil springs 52 and 54. Thus, the ends of the coil springs 52 and 54 which are attached or anchored to the connecting plate 17 (FIG. 3) or the flange 39 (FIG. 6), are the thickest, while the free end of the coil springs 52 and 54 are the thinnest, in axial thickness t.

As shown in FIG. 7, the inner diameter of the coil springs 52 and 54 is constant. The reasons for, and advantages of having a variable geometry on the coil springs can be more completely explained by reference to FIG. 8, which has a more pronounced variation in geometry than the embodiment of the invention shown in FIG. 7.

FIG. 8 shows two, interleaved, coil springs 62 and 64, each having a lug 60, comparable to the lugs 40 as described in the embodiment shown in FIG. 6. Still referring to FIG. 8, the lugs 60 cooperate with an anchor point such as flange 39 (FIG. 6) to connect or anchor one end of the coil springs 62 and 64 to an input or output device (not shown). The thickness t of the individual coils on the coil springs 62 and 64 varies along the axial length of the coil springs 62 and 64.

In the example shown in FIG. 9, the initial axial thickness t of the rectangular cross-section of the coil springs 62 and 64 is approximately .120 inches at the end of the first coil N1. The axial thickness t initially decreases at a uniform or constant rate along the helix of the coil springs 62 and 64, until, after approximately three turns, the axial thickest of the third coil N3 is reduced to about .030 inches, or roughly 1/4 of the initial thickness. The axial thickness t remains constant for the remaining six coils of the coil springs 62 and 64 in the specific embodiment illustrated in FIGS. 8 and 9.

The outer diameter of the coil springs 62 and 64 is approximately 3.784 inches, with a dimensional tolerance of +.002, and -.001 inches. This taper can be thought of as a variable radial width h in springs 62 and 64. The inner diameter of the coil springs 62 and 64 is not constant, but rather has a taper at one end. The inner diameter is constant at 2.984 inches for half the length of the spring and has a dimensional tolerance of +.000 inches and -.002 inches throughout the length of the coil springs 62 and 64. The half of the coil springs 62 and 64 adjacent the lugs 60, taper radially outward to a larger inner diameter of 3.000 inches, at the lugs 60. The axial length of the intertwined coil springs 62 and 64 is approximately .885 inches, neglecting the machining gaps between the individual coils of coil springs 62 and 64.

Briefly summarized, the coil springs 62 and 64 have a variable geometry in which the coils are axially thickest at the anchor point and taper in a predefined manner towards the free end of the springs 62 and 64. The inner diameter or radial width h of the coil springs 62 and 64 may also be varied in a predetermined manner. These variable spring geometries result primarily from minimizing the axial length of the coil springs 62 and 64, by varying the coil geometry to provide additional material to withstand the operational stresses in each individual coil yet minimizing the excess material. An explanation of the multiple interrelationships of the parameters which affect the design and operation of a capstan spring will illuminate the unexpected advantages of this design.

In a capstan spring having a number of coils N, the first coil N1 carries a disproportionate amount of the load. It is believed that the first coil N1 carries approximately one-half of the entire load transmitted by the capstan spring. Thus, it is desirable to have the first coil N1 be the largest to carry this disproportionate load. Conversely, the spring coils carrying less load do not need to be as large.

For a spring having a rectangular cross-section, the increase in spring size can be achieved by varying either, or both, the axial thickness t or the radial width h of the spring. For this invention, it is preferred to vary the axial thickness of the coil spring rather than varying the radial width.

The centrifugal expansion effect of the capstan springs 52 and 54 does not vary as the coil's axial thickness t is changed, but does vary as the radial width h is changed. Radial expansion from centrifugal acceleration depends upon the stiffness of the capstan springs 62 and 64, which stiffness increases exponentially with an increase in the radial width h of the coil springs. The centrifugal expansion does not vary with a change in the axial thickness t since the centrifugal force is directly proportional to both the mass and the stiffness of the coils, but in opposite ways. The mass, in turn, is linearly proportional to the axial thickness t. The net result is that any change in axial thickness t causes the effect of the change in stiffness to be canceled by the effect of the change in mass so the centrifugal force remains unchanged. Thus, with this invention the axial thickness t is varied to accommodate the spring stresses, rather than varying the radial width h of the coil springs 62 and 64.

Stated in an oversimplified manner, the first coil N1 of the coil springs 62 and 64 carries approximately one-half of the load, with the load in the remaining coils decreasing in a non-linear manner. The load carried by the individual coils of the coil springs 62 and 64 is believed to decrease as a function of the natural log of the axial length from the anchored end of the coil springs 62 and 64. From a practical viewpoint, this explanation means that the first few coils of the capstan spring 62 and 64 carry the majority of the load, while the last few coils conceivably carry little load, but are needed to provide the appropriate amplification of the capstan effect.

The embodiments of FIGS. 7 and 8 accommodate this variable load by increasing the axial thickness t of the first coils near the anchor point on the capstan springs 52, 54, 62, and 64, while decreasing the axial thickness t on the last coils which are furthest from the anchor point. In the example shown in FIG. 9, the first coil N1 on capstan springs 52 and 54 has an initial axial thickness t of 0.120 inches. This axial thickness t decreases linearly to thicknesses of .090 inches, .060 inches, and .030 inches in a uniform manner after one (N2), two (N2), and three (N3) complete coils, respectively. The remaining coils are of a constant axial thickness t.

The variation in coil axial thickness t is linear (.030 inches per coil N) whereas it is believed the load in the coils decreases in a non-linear manner. While it would be preferable from a theoretical design viewpoint to vary the coil axial thickness t in the same relationship as the load varies, it is believed that the linear variation in axial thickness t can be more economically manufactured and yet adequately accommodates the load variation. Simply put, at the present, its cheaper to cut a linear variation on the axial thickness t of the coils than it is to cut a non-linear, axial thickness t.

The above explanation and design is based primarily on accommodating stress, rather than on accommodating stiffness. There are, however, other factors which do influence the design, these being the capstan effect and the back drive effect. The capstan effect which causes an increased gripping and load transfer efficiency varies along the length of the coil springs 52, 54, 62, and 64. The capstan effect increases as the distance from the anchor point (such as lug 60) increases. The result is that the end coils have a much larger amplification or capstan effect than do the coils immediately adjacent the anchor point (such as lugs 60). The designs shown in the embodiments of FIGS. 7 and 8 are believed to provide sufficient material on the end coils of the capstan springs 52, 54, 62, and 64 so that those coils are not over stressed by any operational loads which are exerted or amplified by the capstan effect.

The back drive effect refers to the torque which is required to expand or open the spring coils N on the capstan springs 52, 54, 62, and 64 in order to allow sliding of a shaft gripped by the inside of those capstan springs. The back drive effect is significant if there is a preload or pre-interference between the capstan springs 52, 54, 62, and 64 and one of the shafts, such as shaft section 11 (FIG. 1).

Referring to FIG. 8, the back drive effect varies as a function of the axial thickness t of the capstan springs 62 and 64. The back drive effect is also non-linear and decreases in a non-linear manner from a maximum effect at the coil N1 immediately adjacent the anchor point, to a minimum value towards the free end of the coil springs 62 and 64. The back drive effect of each coil N is believed to vary in an exponential manner, and specifically it is believed to vary proportional to the inverse log of the distance of the coil N from the anchor point.

Stated in an oversimplified manner, the greatest impact on the back drive effect is caused by axial thickness t of the first few coils immediately adjacent to the anchor point. The thicker these first few coils immediately adjacent the anchor point, the larger the back drive effect and the larger the force required to allow slipping. In many designs, such as the designs of the alternate embodiment of FIG. 8, the increased axial thickness t of the coil springs 62 and 64, to accommodate the operational loads causes an undesirable increase in the back drive effect. Succinctly stated, increasing the axial thickness t to accommodate higher loads also increases the back drive effect, which has the undesirable result of requiring more torque on the shaft which is grasped by the capstan effect in order to allow slippage of that shaft in the back drive condition.

This undesirable increase in the back drive effect can be countered by varying the radial dimension of the spring coils, such as increasing the inner diameter of the first few spring coils adjacent the anchor point. Alternately stated, the radial width h of the springs 62 and 64 varies, having it minimum radial width h adjacent the anchor point (such as lug 60). Thus, FIG. 8 shows (exaggerated for illustration) the inner diameter of the capstan springs 62 and 64 to have a taper which decreases from a maximum value at the anchor point of lugs 60, to a smaller diameter at approximately one-half of the axial length of the coil springs 62 and 64. This slight increase in internal diameter, or clearance counters the increased back drive effect, yet is sufficiently small so that the capstan effect, and the centrifugal expansion of those tapered diameter coils, is not significantly affected.

Again, the ideal variation of the taper to counter the back drive effect would be a non-linear change in the inner diameter of the capstan springs 62 and 64, with that inner diameter varying in the same non-linear manner in which the back drive effect varies along the length of the capstan springs 62 and 64. The linear variation shown in FIG. 8 is believed suitable to counter the back drive effect, yet is much easier to machine on existing equipment.

Since the capstan effect is the greatest on the coils at the free end of the capstan springs 62 and 64, it is desirable to have those end coils have the proper internal diameter to insure that the correct drag (if any) on the gripped shaft exists. If the gripped shaft is on the outer diameter, rather than the inner diameter of the capstan spring 62 and 64, then the corresponding taper to counter the back drive effect would be on the external diameter of the springs, rather than on the internal diameter as illustrated in FIG. 8 and as described above.

Varying the axial thickness t of the capstan spring coils such as 62 and 64, produces several unexpected advantages. The design allows a reduction in the weight and in axial length of the capstan springs 62 and 64. This length reduction can be very important in situations where the space for the clutch is very limited. Further, the design allows the use of spring materials which could not previously be used. In prior designs, the entire spring was designed to accommodate the maximum stress with the result that high strength materials were required to prevent fracture while reducing the spring cross section in order to reduce weight and length. Since the spring cross section is now varied to better accommodate the stress or load distribution in the spring, softer materials can be used. Preferably unalloyed carbon steel such as 1045 steel can be used, although it is possible that spring materials such as phospher bronze could also be used. These materials were not previously able to be used in the high load, high speed designs described above. For example, it is believed that the embodiment of FIG. 8, using unalloyed carbon steel springs with a radial width of .4 inches, can transmit 1200 ft. lbs. of torque at zero RPM, with the clutch operating in the speed range of 4950 to 5050 rpm, and with a diametrical pre-interference of 0.016 inches.

A still further advantage is the reduction in cold weld, galling, and spalling which typically occurs when two similar, hard metals rub together. Previous designs require the use of very high strength, and thus very hard materials in order to prevent fracture of the capstan springs during operational or transient · loading conditions. The tendency to gall or cold weld increases as the hardness of the contacting materials is increased. This galling tendency also increases when the contacting materials are similar. Thus, a hard capstan spring rubbing against a hard engaging surface, both of similar materials, would be likely to gall, whereas the use of a different and softer material such as a softer steel or phospher bronze spring rubbing against the same hard engaging surface, would be far less likely to gall or cold weld.

As indicated above, the tendency to gall is reduced if the contacting metals are very dissimilar. Thus, a steel capstan spring rubbing against an engaging surface made of a the same steel alloy is much more likely to gall than is a capstan spring made of a dissimilar material such as phospher bronze or unalloyed carbon steel which would rub against the same hardened steel engaging surface. This design allows the use of dissimilar materials of different hardnesses, thus reducing the tendency to gall or cold weld.

CLAIMS:

1.   A speed-responsive clutch having an input member (10 or 30) and an output member such as (16 or 36) both mounted for rotation relative to each other, and a cylindrical engaging surface (22 or 31a) on one of said members characterized by:

a capstan spring (12 and 14), (32 and 34), (52 and 54), or (62 and 64) having a plurality of interconnected coils concentrically positioned with respect to said surface, the spring having an engaged position wherein they are forcibly engaging said surface to transmit torque between said members and a disengaged position wherein they are spaced from said surface so as not to transmit torque, and said springs being free to move outwardly in response to centrifugal force from one of said positions to the other position at a predetermined high speed range.

2.   The clutch of Claim 1 characterized by said coils being preloaded against one of said members to determine said high speed range.

3.   The clutch of Claim 1 or 2 further characterized in that a first end of said springs is connected to be rotated by one of said members.

4.   The clutch of Claim 1, 2 or 3 further characterized in that:

said capstan springs are connected to said input member and are rotated by the input member, said cylindrical surface is on said output member and surrounds the springs, said springs being in said disengaged position when the rotational speed of the input member and the springs are below said predetermined speed range, but that above said predetermined speed the springs move outwardly to said engaged position.

5.   The clutch of Claim 4 wherein said springs are arranged such that when a coil on the springs frictionally engages the surrounding cylindrical surface, a spring unwinding force is produced on the coils, thereby enlarging the diameter of the coils and urging the coils to be moved into engagement with the cylindrical surface.

6.    The clutch of Claim 3 or 4 further characterized in that:

said input member engages a first end of said springs in a manner such that rotation of said input member will transmit torque to said springs.

7.    The clutch of Claim 1, 2 or 3 further characterized in that:

the cylindrical surface is on said input member, said springs are in said engaged position when the input member is stationary or rotating at slow speeds, and wherein said springs are connected to rotate with and drive the output member as the input member rotates, said springs moving to said second position when the centrifugal force disengages the springs from the cylindrical surface on the input member.

8.    The clutch of Claim 7 characterized by:

said springs having a first end fastened to said second member (36), said springs being free to move radially outward in response to centrifugal force so that the spring coils expand to disconnect said members at said speed range.

9.    The clutch of Claim 8 further characterized in that:

said capstan springs are formed and oriented so that rotation of the first member (30) to drive the second member (36) through the spring means produces a winding action on the springs.

10.   The clutch of any of the preceding claims further characterized in that said coils (52 and 54) have an axial thickness which varies along the length of said coils, having its greatest axial thickness at the coil having the largest load.

11. The mechanism of any of the preceding claims further characterized in that at least a portion of said spring coils (62 and 64) have a radial cross sectional dimension that varies along the length of said coils with the minimum radial dimension occurring adjacent the end of said springs having the largest load.

12. The mechanism of any of the preceding claims further characterized in that at least a portion of said spring coils (62 and 64) have an inner diameter which is increased adjacent the end of said springs having the largest load in order to reduce a backdrive effect exerted by said springs.

13. The mechanism of any of the preceding claims further characterized in that said springs comprise at least two interleaved springs symmetrically arranged to maintain the rotational balance of said springs.

14. The mechanism of any of the preceding claims further characterized in that said springs (52 and 54) or (62 and 64) have an axial coil thickness which varies in a linear manner along at least a portion of the length of said springs.

15. The mechanism of any of the preceding claims further characterized in that said springs (62 and 64) have an axial coil thickness that varies in a nonlinear manner along at least a portion of the length of said springs.

16. A method for selectively engaging two members (10 and 16 or 30 and 36), as a function of the rotational speed of the members by using capstan springs (12 and 14), (32 and 34), by mounting a first member and a second member relative to each other, so that at least one of said members can rotate, characterized by:

connecting a first end of said spring to a member which can rotate, said spring having a plurality of interconnected coils;

preloading at least a portion of said coils into contact with one of said members; and

rotating said member to which said spring is connected to a speed sufficient to cause a centrifugal force to overcome said preload, and to allow said spring to radially expand until said coils of said preloaded spring disengage from said member with which they had been preloaded into contact.

17. The method of Claim 20, further characterized by the step of:

engaging a surface on said member to which said spring is connected by rotating said member to which said capstan spring is connected to a speed sufficient to cause a centrifugal force to expand said coils on said spring sufficiently to engage said surface.

18. The method of Claims 16 or 17 further characterized by the step of:

backdriving said spring and causing a backdrive effect by rotating said member with which said spring is preloaded into contact, said backdriving rotation occurring in a direction opposite the direction in which said coils are wound; and

controlling the amount of the backdriving effect by reducing the amount of preload exerted by at least a portion of the first coils adjacent said first end of said spring.

19. The method of Claims 16, 17 or 18, further characterized by the step of:

symmetrically expanding said coils on said springs to engage and disengage said members by using symmetric arrangements of interleaved coils which maintain the rotational balance under rotational expansion.

0153079

Fig. 1

Fig. 2

Fig. 3

0153079

Fig. 4

23

19

17

14

18

12

19

23

Fig. 5

30

31a

42

38

34

40

36

31

40

39

32

34

40

B

32

41

39

40

36

Fig. 6

41

B

52 54 52

**Fig. 7**

52 54

62 64

60

2.984 DIA.

3.000 DIA.

60

64 62

**Fig. 8**

**Fig. 9**

.030

.045

.060

.075

.090

.105

.120

## European Patent Office

## EUROPEAN SEARCH REPORT

. Application number

EP 85 30 0751

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 838 938 (SACCHINI)<br><br>* Whole document *<br><br>--- | 1-6,9,<br>16,17 | F 16 D 43/18 |
| X | FR-A-1 230 144 (BROWN BOVERI)<br><br>* Whole document *<br><br> | 1-3,5-<br>9,16,<br>18 | |
| Y | | 11,17,<br>19 | |
| X | DE-C- 915 165 (SCHMETTOW)<br><br>* Whole document *<br><br>--- | 1-3,5-<br>9,16 | |
| X | FR-A- 755 112 (MOINEAU)<br><br>* Page 3, figures 5,6 * | 1,3-6,<br>9,13 | TECHNICAL FIELDS SEARCHED (Int. Cl.4)<br><br>F 16 D 43/00 |
| Y | | 17,19 | |
| Y | US-A-1 972 915 (BARTON)<br>* Page 2, figure 1 *<br><br>--- | 11 | |
| A | FR-A- 995 834 (DETRAUX)<br><br>--- | | |
| A | FR-A- 563 506 (BROUSSOUSE)<br><br>--- -/- | | |

The present search report has been drawn up for all claims

| Place of search | Date of completion of the search | Examiner |
|---|---|---|
| THE HAGUE | 21-05-1985 | BALDWIN D.R. |

**European Patent Office**

| DOCUMENTS CONSIDERED TO BE RELEVANT | | | Page 2 | |
|---|---|---|---|---|
| Category | Citation of document with indication, where appropriate, of relevant passages | Relevant to claim | CLASSIFICATION OF THE APPLICATION (Int. Cl.4) | |
| A | US-A-3 055 476 (FLORA) | | | |
| A | FR-A-1 120 563 (ROSENTHAL) | | | |
| A | DE-C- 232 537 (GEIST ELEKTRIZITÄTS) | | | |

TECHNICAL FIELDS SEARCHED (Int. Cl.4)

The present search report has been drawn up for all claims

| Place of search | Date of completion of the search | Examiner |
|---|---|---|
| THE HAGUE | 21-05-1985 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82